# EUROPEAN PATENT SPECIFICATION

(11) **EP 2 032 395 B1**
(45) Date of publication and mention of the grant of the patent: **03.08.2011**
(21) Application number: 07733333.4
(22) Date of filing: 21.06.2007
(51) Int. Cl.: B60R 13/10, F16B 41/00, F16B 43/00

(54) **FIXING OF LICENCE PLATE SUPPORT**
BEFESTIGUNG EINES NUMMERNSCHILDTRÄGERS
FIXATION D'UN SUPPORT POUR UNE PLAQUE D'IMMATRICULATION

(30) Priority: 23.06.2006 GB 0612492; 19.07.2006 GB 0614340
(43) Date of publication of application: 11.03.2009
(73) Proprietor: Hills Numberplate Holdings Limited, Birmingham B6 7JJ (GB)
(72) Inventor: CORDELL, Michael, Birmingham B15 1JB (GB)
(74) Representative: Moore, Christopher Mark
(86) International application number: PCT/GB2007/002338
(87) International publication number: WO 2007/148109

(56) References cited:
- CH-A5- 659 905
- GB-A- 2 060 235
- GB-A- 2 312 265
- US-A- 1 390 732
- US-A- 2 177 215
- US-A- 2 461 114
- US-B1- 6 757 998

## Description

This invention relates to fixing, in particular the fixing of a support for a sign to a site of use.

Articles, such as signs, for instance vehicle licence plates, can be provided with supports which are attachable to or at a site of use, e.g. part of a vehicle in the case of the sign being a vehicle licence plate.

For example, US6,757,99881 discloses a grill mounted front license plate bracket which comprises at least two mounting plates, spacing rods, fasteners and fastener engaging elements. Each of the mounting plates has a set of holes adapted to receive the fasteners.

US2,177,215 discloses a license plate fastener having a provision which will allow a user to quickly install a license plate on a conventional license plate bracket of an automobile.

It is known that different sites of use may require different configurations of fixing means. For example, when two screws or bolts are used, the spacing between them may be different at two different sites of use.

Accordingly, it is desirable to provide a support which is securable to or at a plurality of sites of use, which sites having the same or different fixing requirements.

Taking vehicle licence plates as an example, it is further known that fixing requirements may vary from one vehicle model to another. Therefore, a specific support may be required for mounting a plate on to each model.

In this specific field it would clearly be advantageous for there to be fixing means capable of fixing a support to a plurality of vehicles with different fixing requirements.

It is an object of this invention to at least partially address this issue.

A first aspect of the invention provides a combination of a sign, a support for a sign and a means to secure the support at or to a site of use comprising an elongate washer having one or more apertures therethrough, the elongate washer being located or locatable in a rebate formed in the support, the sign or both, characterised in that the rebate is sized and dimensioned so as to permit relative movement of the elongate washer located or locatable therein.

The rebate may be sized and dimensioned such that when one of the elongate washers is located therein, the elongate washer has a single degree of freedom along which it can move within the rebate, e.g. by sliding

The rebate may be sized and dimensioned such that an elongate washer may be located therein in a plurality of orientations, for example in one orientation or another. Specifically, although not exclusively, the elongate washer may be removed from the rebate and rotated by 180°, e.g. turned through 180° in the principal plane of the washer, and still be locatable within the rebate.

A second aspect of the invention provides a combination of a sign, a support for a sign and a means to secure the support at or to a site of use comprising an elongate washer having one or more apertures, the means being located or locatable in a rebate formed in the support, the sign or both, characterised in that the elongate washer is also locatable within the rebate following rotation of the elongate washer by 180°.

A third aspect of the invention provides means for securing a support for a sign to or at a site of use, said means comprising at least one elongate washer, having a principal axis and comprising a body with a plurality of apertures provided therethrough, which are provided along the length of the washer, characterised in that the apertures are distributed asymmetrically about a line of symmetry transverse to the principal axis of the washer.

Preferably, the apertures may be formed with aligned centres positioned along the principal axis of the washer.

Preferably, the elongate washer may have more than two apertures, say five or six apertures.

A fourth aspect of the invention provides a combination of a support for a sign or a sign and means according to the third aspect of the invention, wherein the support or the sign comprises one or more rebates.

The elongate washer may be located or locatable at least partially within the or a rebate.

Preferably, the elongate washer may be located or locatable within the or each rebate and may be also locatable therein following rotation of the elongate washer by 180°.

Preferably, the one or more rebates may be each sized and dimensioned so as to permit relative movement of the elongate washer located or locatable therein, e.g. such that the washer is slidable within the or one of the rebates.

In a combination according to the present invention, it may be preferred for the or each rebate to further comprise a stepped portion and/or chamfered sides leading to an aperture.

In a combination according to the present invention, it may be preferred for the support to comprise a backing portion and a frame portion, wherein the sign is locatable between the two portions.

A combination according to either the first or second aspect of the invention may comprise means according to the third aspect of the invention.

A further aspect of the invention provides for the use of means according to the third aspect of the invention to secure a support for a sign to or at a site of use.

According to a still further aspect of the invention there is provided a method for installing a support for a sign at a site of use comprising:
a. placing an elongate washer having one or more apertures adjacent a support for a sign;
b. receiving at least a part of a fastener in the or one of the apertures;
c. securing the support to or at a site of use using the fastener.

The method may further comprise securing a sign to the support.

The elongate washer may be at least partially locatable in a rebate provided in the support for a sign.

Alternatively, the elongate washer may be at least partially locatable in a rebate provided in a sign for use with the support.

Also, the elongate washer may be locatable at least partially in a rebate provided in the support and at least partially in a rebate provided in the sign for use with the support.

The fastener may be in two parts, e.g. a male and female part. For instance, the male part may be received in the or one of the apertures and inserted into the female part in such a way that a head of the female part is brought to bear against a lower surface of the support and whereby a flange provided on the female part expands to bear against a facing surface of a site of use.

In order that the invention may be fully understood, it will now be described, by way of example only, and with reference to the accompanying drawings, in which:
Figure 1 is an exploded view of a sign and support assembly according to the invention.
Figure 2 is a sectional view along line Z-Z of part of the support of Figure 1.
Figure 3 is a plan view of part of the support of Figure 1.
Figure 4 is a cross-sectional view of a combination comprising a support for a sign and a sign.
Figure 5 is a plan view from below of the sign of Figure 4.
Figure 6 is a plan view from above of the support for a sign of Figure 4

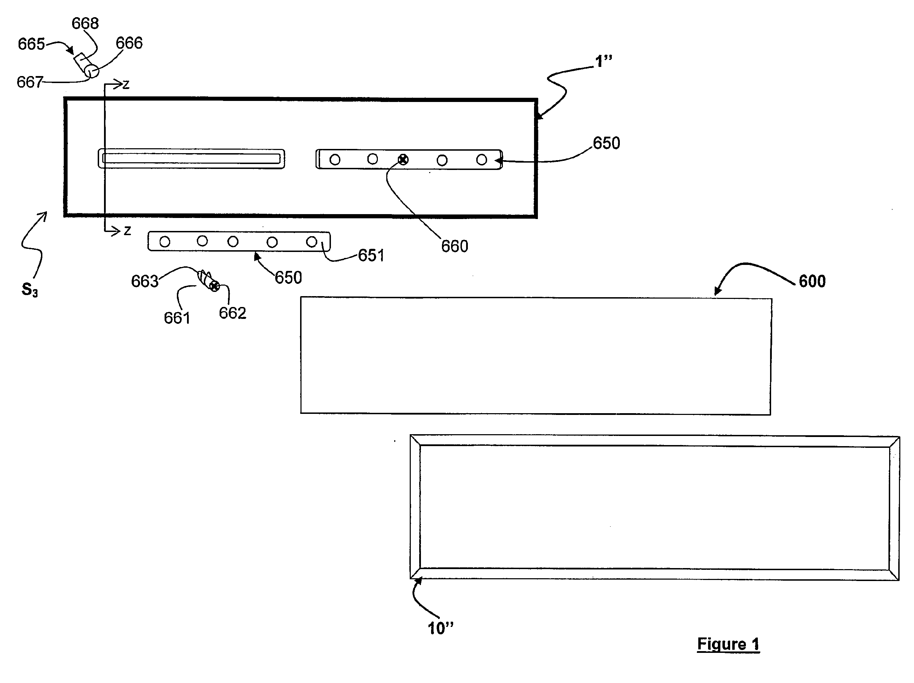

In Figure 1 there is shown a two-part support assembly S₃, comprising a first part 1" to provide a backing portion and a second part 10" to provide a frame portion.

Located between the first 1" and second 10" parts is a sign 600, such as a numberplate (which is shown without any indicia or other markings for clarity only).

Also provided is a pair of elongate washers 650 and a pair of fasteners, for example two-part fasteners 660 comprising a male part 661 with a driveable chamfered head 662 and a threaded shank 663 and a female part 665 having a flat head 666 and an aperture provided with an internally threaded bore 667 provided within a shank 668 which can expand to provide a flange (not shown).

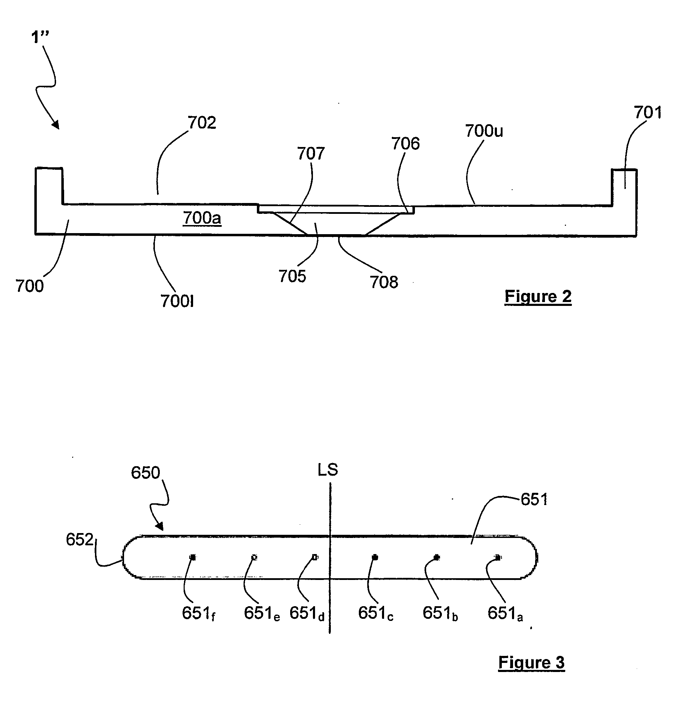

The details of the first part 1" of the support S₃ are best shown in Figure 2. The first part 1" comprises a substantially flat body 700 having (as shown) an upper surface 700u and a lower surface 700l and an upstanding wall 701 which bounds the upper surface 700u to provide a rebate 702 for reception of the sign 600. The height of the wall 701 will typically be designed such that an edge of a sign 600 received in the rebate 702 does not stand proud of the wall 701.

Running along a centre line of the first part 1" are a pair of elongate rebates 705. Each rebate 705 has a pair of matched steps or shoulders 706 running parallel to, and either side of, said centre line, and chamfered sides 707 leading to an aperture 708.

As shown in Figures 1 and 2, each elongate washer 650 has a body 651 with a plurality of through holes 651 a, b, c, d, e, f formed with aligned centres positioned along the principal axis therein. As will be appreciated from Figure 3, the through holes 651 a-f are not distributed symmetrically about a line of symmetry LS of the washer 650. The washer 650 has rounded ends 652, and the through holes 651a-f are preferably countersunk.

In use, the washers 650 are receivable in the elongate rebates 705 such that the body 651 of the washer 650 is retained by the shoulders 706 of the rebate 705. The male part 661 of a fastener 660 is receivable in one of the holes 651 a-f of the washer 650. Because the holes 651 a-f are usually countersunk, the head 662 of the male part 661 will not protrude beyond the upper surface of the washer 650.

As is indicated in Figure 1, the elongate rebate 705 is longer than the washer 650 so that the washer 650 (prior to being secured) is free to slide within the rebate 705.

Clearly, because there are five (Figure 1) or six (Figure 3) apertures 651 a-f formed in the washer 650 there are five or six points through which the male part 661 of the fastener 660 can extend. Also, because the washer 650 can move within the rebate 705 the apertures 651 a-f are provided with a further degree of freedom (in one embodiment the washer 650 is 14mm shorter than rebate 705, thereby providing 7mm of movement for the centre of each aperture 651 a-f. Also, because the apertures 651 a-f are not symmetrically disposed about the line of symmetry LS, by rotating the washer 650 through 180° the centres of the apertures 651 a-f are brought to a different position in relation to the rebate 705. In this way, a centre of at least one of the apertures 651 a-f can be positioned at substantially any point along the aperture 708 of the rebate 705. Other configurations and numbers of holes may be used. This enables fixing of the support S₃ to be more flexible and, for example, allows a single support to be mountable at a variety of sites. For example, the support S₃ can be used with the captive fixing means provided on different vehicles produced by different carmakers.

To secure the sign 600 to a site of use (e.g. to a vehicle), the washers 650 are located in the rebate 705 of the first part 1" of the Support S₃ and a male part 661 of a fastener 610 is received in an appropriate aperture, i.e. one of the apertures 651 a-f. The female part 665 of the fastener 650 is threaded on to the male part 661 and the male part 661 is driven thereinto using an appropriate tool which causes the flat head 666 of the female part 665 to be brought to bear against the lower surface 700l of the first part 1" of the support S₃ and causes the flange (not shown) to expand to bear against the facing surface of the site of use (e.g. the vehicle).

With the first part 1" of the support S₃ secured to a site of use, adhesive may then be applied over substantially the whole of the upper surface 700u of the first part.

The sign 600 can then be adhered to the upper surface 700u of the body 700 of the first part 1" of the support S₃.

The adhesive may be applied to the rear of the sign 600 and be protected by a release liner, or may be directly applied to the first part 1" of the support S₃.

The second part 10" of the support S₃ is then secured, preferably permanently secured, e.g. clipped and/or adhered, to the first part 1" to secure the sign 600 therebetween.

The sign 600 may comprise frangible portions defined by lines of weakness.

The sign 600 may have an electric or electronic device located therein or thereon, preferably in or on one of the frangible parts (not shown). The device may have an onboard antenna or connection means for operable connection to an outboard antenna, which may be in another part of the plate 600 or in one or other of the first 1" and second 10" parts of the support S₃.

The first part 1" of the support S₃ may have lines of weakness (not shown).

The second part 10" of the support S₃ may have lines of weakness (also not shown).

Should an attempt be made to remove the second part 10" of the support S₃ it may (or will if lines of weakness are provided) break. The wall 701 denies or inhibits access to the rear of the sign 600.

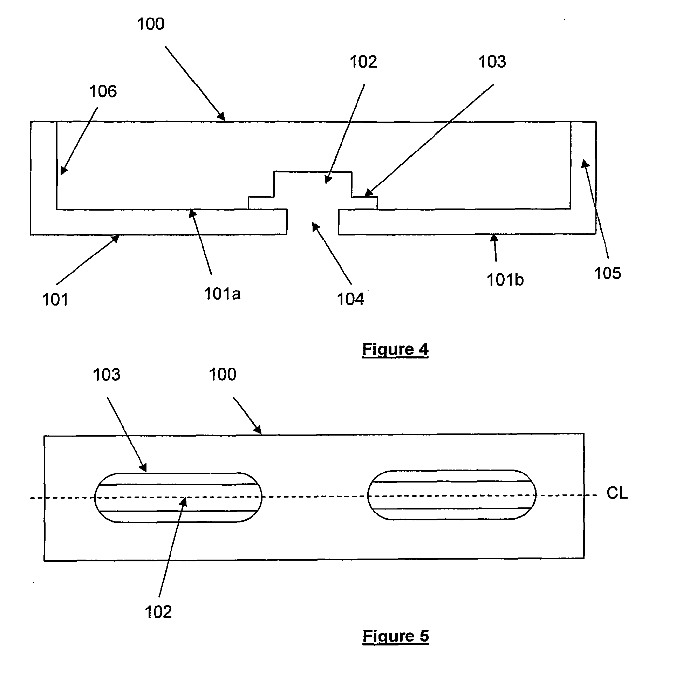

Referring to Figure 4 there is shown a sign 100 and a support 101 for the sign 100.

The features of the sign 100 may be more readily appreciated by considering Figure 4 and Figure 5 together.

Running along a centre line CL of the sign 100 are a pair of elongate rebates 102. Each rebate 102 has a pair of matched steps or shoulders 103 running parallel to, and either side of, the centre line CL.

As shown in Figure 4, the support for a sign 101 comprises a substantially flat body having an upper surface 101a and a lower surface 101b and an upstanding wall 105 which bounds the upper surface 101a to provide a rebate 106 for reception of the sign 100. The height of the wall 105 will typically be designed such that an edge of a sign received in the rebate 106 does not stand proud of the wall 105.

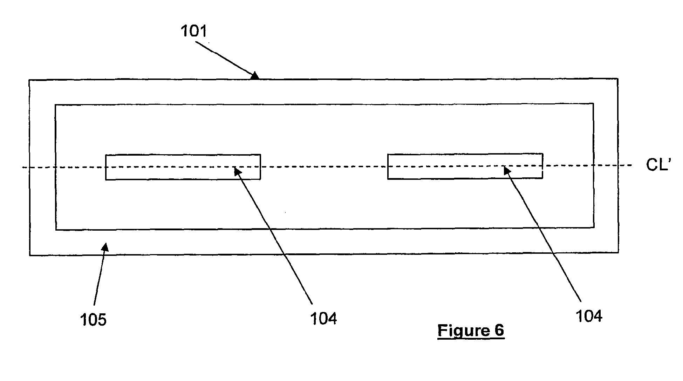

Referring to Figure 6, running along a centre line CL' of the support 101 are a pair of elongate apertures 104.

An elongate washer with one or more apertures with aligned centres positioned along the principal axis therein (not shown) is also provided.

Furthermore, suitable fixing means (not shown) are also provided.

Suitable washers and fixing means are those described above in relation to Figure 1 and Figure 3.

In use, fixing means for securing the sign to or at a site of use is extendable through an aperture in the elongate washer and aperture 104 within the support 101, such that the washer is substantially adjacent the upper surface of the support. The sign 100 is located on or in the support 101 such that the or each elongate washer is retained by the pair of matched steps or shoulders 103 provided in the or each rebate 102 within the sign 100. Each rebate 102 is sized and dimensioned so as to be capable of accommodating an end of suitable fixing means, e.g. a bolt head.

The matched steps or shoulders 103 are sized and dimensioned such that when an elongate washer is located therein, the elongate washer is slidable along the principal axis of the rebate 102.

If the apertures provided in the or each elongate washer are sufficiently countersunk, the end of the fixing means, e.g. a bolt head, may not stand proud of the washer, thus obviating the requirement for the rebate 102 to be any deeper than the washer is thick. Therefore, in such a case, the rebate 102 need not be provided with matched steps or shoulders 103 for the functioning of the invention.

The sign 100 may comprise one or more rebates 102.

The support 101 may comprise one or more apertures 104 which may be elongate so as to allow fixing to be performed at a plurality of locations using a single washer per aperture.

While the upstanding wall 105 acts as a security feature to deny or inhibit access to the rear of the sign, it should be appreciated that its presence is not essential for the function of the invention. Thus, the support for a sign may be substantially flat across its entire upper surface.

Preferably, lines of weakness may be provided in either, or both, of the support or the sign.

In a preferred embodiment, a plate made in accordance with GB 2376437 will be used (the entire disclosure of which is hereby incorporated by reference). Preferably 5000 series retroreflective material supplied by 3M will be used, so that if an attempt is made to remove the indicia from the substrate of the plate 600, the retroreflective sheet material will fragment. Other retroreflective sheeting may also be used which may or may not have discontinuities.

Of course any numberplate construction and/or other signage may be used in conjunction with a support and means for fixing the support to or at a site of use in accordance with the invention.

The support and fixing means has wide ranging applicability and may be used to secure any sign to a site of use. The sign need not be of any particular size or shape, but will, in most cases, correspond to the shape of the support.

The elongate washer may comprise any desired number of apertures, for instance from 0 to 10.

The elongate washer need not have rounded ends or mirror symmetry. For example, it may be in the shape of a parallelogram.

The elongate washer may be located or locatable at least partially within a rebate on the or a support and/or at least partially within a rebate on the or a sign.

## Claims

1. A combination of a sign (600, 100), a support (S₃, 101) for a sign and a means to secure the support (S₃, 101) at or to a site of use comprising an elongate washer (650) having one or more apertures therethrough (651 a-f), the elongate washer (650) being located or locatable in a rebate (702, 705, 102) formed in the support (S₃, 101), the sign (600, 100) or both, **characterised in that** the rebate (702, 705, 102) is sized and dimensioned so as to permit relative movement of the elongate washer (650) located or locatable therein.

2. A combination according to Claim 1, wherein the elongate washer is slidable within the rebate.

3. A combination according to Claim 1 or Claim 2, wherein the elongate washer (650) is locatable within the rebate (702, 705, 102) and is also locatable therein following rotation of the elongate washer (650) by 180°.

4. A combination of a sign (600, 100), a support (S₃ 101) for a sign and a means to secure the support (S₃, 101) at or to a site of use comprising an elongate washer (650) having one or more apertures (651 a-f), the means being located or locatable in a rebate (702, 705, 102) formed in the support (S₃, 101), the sign (600, 100) or both, **characterised in that** the elongate washer (650) is locatable within the rebate (702, 705, 102) following rotation of the elongate washer (650) by 180°.

5. Means for securing a support (S₃, 101) for a sign (600, 100) to or at a site of use, said means comprising at least one elongate washer (650) having a principal axis and comprising a body (651) with a plurality of apertures (651a-f) provided therethrough, which are provided along the length of the washer (650), **characterised in that** the apertures (651a-f) are distributed asymmetrically about a line of symmetry (LS) transverse to the principal axis of the washer (650).

6. Means according to Claim 5, wherein the apertures (651a-f) are formed with aligned centres positioned along the principal axis of the washer (650).

7. Means according to Claim 5 or Claim 6, wherein the elongate washer (650) has more than two apertures, say five or six apertures (651a-f).

8. A combination of a support (S₃, 101) for a sign (600, 100) or a sign (100) and means as claimed in any one of claims 5 to 7, wherein the support (S₃, 101) or the sign (100) comprises one or more rebates (702, 705).

9. A combination according to Claim 8, wherein the elongate washer (650) is located or locatable at least partially within the or a rebate (702, 705, 102).

10. A combination according to any one of Claims 8 to 9, wherein the elongate washer (650) is located or locatable within the or each rebate (702, 705, 102) and is also locatable therein following rotation of the elongate washer (650) by 180°.

11. A combination according to any one of Claims 8 to 10, wherein the one or more rebates (702, 705, 102) are each sized and dimensioned so as to permit relative movement of the elongate washer (650) located or locatable therein, e.g. such that the washer (650) is slidable within the or one of the rebates (702, 705,102).

12. A combination according to any one of Claims 1 to 4 or Claims 8 to 11, wherein the or each rebate (702, 705, 102) further comprises a stepped portion (706, 103), and/or chamfered sides (707) leading to an aperture (708, 104).

13. A combination according to any one of Claims 1 to 4 or Claims 8 to 11, wherein the support (S₃) comprises a backing portion (1") and a frame portion (10") and wherein the sign (600) is locatable between the two portions.

14. A combination according to any one of Claims 1 to 4 comprising means according to any one of Claims 5 to 7.

15. Use of means according to any one of Claims 5 to 7 to secure a support (S₃, 101) for a sign (600, 100) to or at a site of use.

## Patentansprüche

1. Kombination aus einem Schild (600, 100), einem Träger (S₃, 101) für ein Schild und einem Mittel zum Befestigen des Trägers (S₃, 101) auf oder an einem Nutzungsort, die Folgendes umfasst: eine langgestreckte Unterlegscheibe (650) mit einem oder mehreren Durchlässen (651 a-f), wobei die langgestreckte Unterlegscheibe (650) in einem in dem Träger (S₃, 101), dem Schild (600, 100) oder in beiden ausgebildeten Falz (702, 705, 102) angeordnet ist oder angeordnet werden kann, **dadurch gekennzeichnet, dass** der Falz (702, 705, 102) in Größe und Dimensionierung so ausgebildet ist, das er die relative Bewegung der in dem Falz angeordneten bzw. platzierbaren langgestreckten Unterlegscheibe (650) erlaubt.

2. Kombination nach Anspruch 1, bei der die langgestreckte Unterlegscheibe innerhalb des Falzes verschiebbar ist.

3. Kombination nach Anspruch 1 oder 2, bei der die langgestreckte Unterlegscheibe (650) innerhalb des Falzes (702, 705, 102) platzierbar ist und auch nach einer Drehung der langgestreckten Unterlegscheibe (650) um 180° darin plazierbar ist.

4. Kombination aus einem Schild (600, 100), einem Träger (S₃, 101) für ein Schild und einem Mittel zum Befestigen des Trägers (S₃, 101) auf oder an einem Nutzungsort, die Folgendes umfasst: eine langgestreckte Unterlegscheibe (650) mit einem oder mehreren Durchlässen (651 a-f), wobei das Mittel in einem Falz (702, 705, 102) angeordnet ist oder angeordnet werden kann, der in dem Träger (S₃, 101), dem Schild (600, 100) oder beiden ausgebildet ist, **dadurch gekennzeichnet, dass** die langgestreckte Unterlegscheibe (650) innerhalb des Falzes (702, 705, 102) platzierbar ist, nachdem die langgestreckte Unterlegscheibe (650) um 180° gedreht wurde.

5. Mittel zum Befestigen eines Trägers (S₃, 101) für ein Schild (600, 100) auf oder an einem Nutzungsort, das Folgendes umfasst: wenigstens eine langgestreckte Unterlegscheibe (650), die eine Hauptachse und einen eine Mehrzahl von über die Länge der Unterlegscheibe (650) verteilten Durchlässen (8651 a-f) aufweisenden Hauptteil (651) umfasst, **dadurch gekennzeichnet, dass** die Durchlässe (651 a-f) asymmetrisch um eine quer zur Hauptachse der Unterlegscheibe (650) verlaufende Symmetrielinie (LS) verteilt sind.

6. Mittel nach Anspruch 5, bei dem die Durchlässe (651 a-f) mit fluchtenden Drehpunkten ausgebildet sind, die entlang der Hauptachse der Unterlegscheibe (650) positioniert sind.

7. Mittel nach Anspruch 5 oder 6, bei dem die langgestreckte Unterlegscheibe (650) mehr als zwei Durchlässe aufweist, z.B. fünf oder sechs (651 a-f).

8. Kombination eines Trägers (S₃, 101) für ein Schild (600, 100) oder ein Schild (100) und Mittel gemäß einem der Ansprüche 5 bis 7, wobei der Träger (S₃, 101) oder das Schild (100) einen oder mehr Falze (702, 705) umfasst.

9. Kombination nach Anspruch 8, bei der die langgestreckte Unterlegscheibe (650) wenigstens teilweise in dem oder einem Falz (702, 705, 102) angeordnet ist oder angeordnet werden kann.

10. Kombination nach einem der Ansprüche 8 bis 9, bei der die langgestreckte Unterlegscheibe (650) innerhalb des oder jedes Falzes (702, 705, 102) angeordnet ist oder angeordnet werden kann und auch darin platziert werden kann, nachdem die langgestreckte Unterlegscheibe (650) um 180° gedreht wurde.

11. Kombination nach einem der Ansprüche 8 bis 10, bei der der oder mehrere Falz(e) (702, 705, 102) in Größe und Dimensionierung jeweils so ausgebildet ist/sind, dass eine relative Verschiebung der darin angeordneten oder platzierbaren langgestreckten Unterlegscheibe (650) möglich ist, z.B. so, dass die Unterlegscheibe (650) innerhalb des oder einem der Falz(e) (702, 705, 102) verschiebbar ist.

12. Kombination nach einem der Ansprüche 1 bis 4 oder 8 bis 11, bei der der oder jeder Falz (702, 705, 102) weiterhin einen abgestuften Bereich (706, 103) und/oder abgeschrägte Seiten (707) aufweist, die zu einem Durchlass (708, 104) führen.

13. Kombination nach einem der Ansprüche 1 bis 4 oder 8 bis 11, bei der der Träger (S₃) einen Stützbereich (1") und einen Rahmenbereich (10") umfasst und bei der das Schild (600) zwischen den beiden Bereichen platzierbar ist.

14. Kombination nach einem der Ansprüche 1 bis 4, die ein Mittel gemäß einem der Ansprüche 5 bis 7 aufweist.

15. Verwendung eines Mittels gemäß einem der Ansprüche 5 bis 7 zum Befestigen eines Trägers (S₃, 101) für ein Schild (600, 100) auf oder an einem Nutzungsort.

## Revendications

1. Combinaison composée d'un panneau (600, 100), d'un support (S₃, 101) pour un panneau et de moyens pour fixer le support (S₃, 101) au niveau de ou sur un site d'utilisation comprenant une rondelle allongée (650) ayant une ou plusieurs ouvertures à travers cette dernière (651 a - f), la rondelle allongée (650) étant positionnée ou positionnable dans une feuillure (702, 705, 102) formée dans le support (S₃, 101), le panneau (600, 100) ou les deux, **caractérisée en ce que** la feuillure (702, 705, 102) a une taille et est dimensionnée afin de permettre le mouvement relatif de la rondelle allongée (650) positionnée ou positionnable à l'intérieur de cette dernière.

2. Combinaison selon la revendication 1, dans laquelle la rondelle allongée peut coulisser à l'intérieur de la feuillure.

3. Combinaison selon la revendication 1 ou la revendication 2, dans laquelle la rondelle allongée (650) est positionnable à l'intérieur de la feuillure (702, 705, 102) et est également positionnable à l'intérieur de cette dernière, suite à la rotation de la rondelle allongée (650) sur 180°.

4. Combinaison composée d'un panneau (600, 100), d'un support (S₃, 101) pour un panneau et de moyens pour fixer le support (S₃, 101) au niveau de ou sur un site d'utilisation, comprenant une rondelle allongée (650) ayant une ou plusieurs ouvertures (651 a - f), les moyens étant positionnés ou positionnables dans une feuillure (702, 705, 102) formée dans le support (S₃, 101), le panneau (600, 100) ou les deux, **caractérisée en ce que** la rondelle allongée (650) est positionnable à l'intérieur de la feuillure (702, 705, 102) suite à la rotation de la rondelle allongée (650) sur 180°.

5. Moyens pour fixer un support (S₃, 101) pour un panneau (600, 100) sur ou au niveau d'un site d'utilisation, lesdits moyens comprenant au moins une rondelle allongée (650) ayant un axe principal et comprenant un corps (651) avec une pluralité d'ouvertures (651 a - f) prévues à travers ce dernier, qui sont prévues le long de la longueur de la rondelle (650), **caractérisés en ce que** les ouvertures (651 a - f) sont réparties de manière asymétrique autour d'un axe de symétrie (LS) transversale par rapport à l'axe principal de la rondelle (650).

6. Moyens selon la revendication 5, dans lesquels les ouvertures (651 a - f) sont formées avec des centres alignés positionnés le long de l'axe principal de la rondelle (650).

7. Moyens selon la revendication 5 ou la revendication 6, dans lesquels la rondelle allongée (650) a plus de deux ouvertures, c'est-à-dire cinq ou six ouvertures (651a - f).

8. Combinaison composée d'un support (S₃, 101) pour un panneau (600, 100) ou un panneau (100) et de moyens selon l'une quelconque des revendications 5 à 7, dans laquelle le support (S₃, 101) ou le panneau (100) comprend une ou plusieurs feuillures (702, 705).

9. Combinaison selon la revendication 8, dans laquelle la rondelle allongée (650) est positionnée ou positionnable au moins partiellement à l'intérieur de la ou d'une feuillure (702, 705, 102).

10. Combinaison selon l'une quelconque des revendications 8 ou 9, dans laquelle la rondelle allongée (650) est positionnée ou positionnable à l'intérieur de la ou de chaque feuillure (702, 705, 102) et est également positionnable à l'intérieur de cette dernière suite à la rotation de la languette allongée (650) sur 180°.

11. Combinaison selon l'une quelconque des revendications 8 à 10, dans laquelle les une ou plusieurs feuillures (702, 705, 102) ont chacune une taille et sont dimensionnées afin de permettre le mouvement relatif de la rondelle allongée (650) positionnée ou positionnable à l'intérieur de cette dernière, par exemple, de sorte que la rondelle (650) peut coulisser à l'intérieur de la ou de l'une des feuillures (702, 705, 102).

12. Combinaison selon l'une quelconque des revendications 1 à 4 ou des revendications 8 à 11, dans laquelle la ou chaque feuillure (702, 705, 102) comprend en outre une partie étagée (706, 103) et/ou des côtés chanfreinés (707) menant vers une ouverture (708, 104).

13. Combinaison selon l'une quelconque des revendications 1 à 4 ou des revendications 8 à 11, dans laquelle le support (S₃) comprenant une partie de renfort (1") et une partie de châssis (10") et dans laquelle le panneau (600) est positionnable entre les deux parties.

14. Combinaison selon l'une quelconque des revendications 1 à 4, comprenant des moyens selon l'une quelconque des revendications 5 à 7.

15. Utilisation de moyens selon l'une quelconque des revendications 5 à 7 pour fixer un support (S₃, 101) pour un panneau (600, 100) sur ou au niveau d'un site d'utilisation.
